# EUROPEAN PATENT SPECIFICATION

(11) **EP 4 074 080 B1**
(45) Date of publication and mention of the grant of the patent: **11.02.2026**
(21) Application number: 20829316.7
(22) Date of filing: 10.12.2020
(51) Int. Cl.: H04W 4/029, H04W 4/024, H04W 64/00, H04W 76/18

(54) **METHOD AND SYSTEM FOR EXPLOITING MILLIMETER-WAVE CONNECTIONS**
VERFAHREN UND SYSTEM ZUR NUTZUNG VON MILLIMETERWELLENVERBINDUNGEN
PROCÉDÉ ET SYSTÈME POUR EXPLOITER DES CONNEXIONS À ONDES MILLIMÉTRIQUES

(30) Priority: 13.12.2019 IT 201900024000
(43) Date of publication of application: 19.10.2022
(73) Proprietor: Telecom Italia S.p.A., 20123 Milano (IT)
(72) Inventor: BARBERIS, Sergio, 10148 Torino (IT); CALOCHIRA, Giorgio, 10148 Torino (IT)
(74) Representative: Maccalli, Marco
(86) International application number: PCT/EP2020/085421
(87) International publication number: WO 2021/116245

(56) References cited:
- WO-A1-2018/033136
- ANONYMOUS: "Come migliorare la ricezione del segnale cellulare - Navigaweb.net", 13 May 2019 (2019-05-13), XP055703645, Retrieved from the Internet <URL:https://www.navigaweb.net/2016/09/come-migliorare-il-segnale-cellulare-o.html> [retrieved on 20200610]

## Description

### Background of the invention

### Field of the invention

The present invention generally relates to wireless communication networks. Particularly, the present invention relates to wireless communication networks having millimeter-wave (mmW) connection capabilities. More particularly, the present invention relates to a method and system for exploiting mmW connections in such wireless communication systems.

### Overview of the related art

The growing demand for mobile data services along with the scarcity of spectrum in the sub-6 GHz frequency band (or cellular band) has given rise to the recent interest in developing wireless communication systems that can exploit the large amount of spectrum available in the mmW frequency band (or mmW band).

Due to its potential for multi-gigabit and ultra-low latency communication links, technologies exploiting the mmW band are expected to play a role in 5^{th} Generation (5G) cellular networks and beyond.

Radio propagation over a wireless communication link in the mmW band (or mmW wireless communication link, or mmW communication link) is particularly sensitive to the presence of obstacles that can severely impair transmission of signals or data (such as digital contents) to/from a mmW-enabled user device. Examples of obstacles may comprise buildings, walls, foliage, and human presence.

As disclosed in T. Wu, T.S. Rappaport, C.M. Collins, "Safe for generations to come", IEEE Microwave Magazine, vol. 16, no. 2, pp. 65-84, March 2015, other examples of obstacles may comprise everyday objects that, in daily use, are typically near the mmW-enabled user device (such as garments, keys, laptops): these objects, considered alone, may cause a non-relevant attenuation to signals or data exchanged over the mmW communication link (*e.g.,* an attenuation below 3dB), however the attenuations due to a number of these objects may sum up, which may prevent signal transmission / reception or signal transmission / reception with a minimum desired quality (*e.g.,* in terms of *"Bit Error Rate"* (BER)).

Just as an example, if the mmW-enabled user device is placed in a container (such as a pocket, a bag, a backpack, or a briefcase), it could be out of reach (or below the minimum desired quality) of any mmW transmission, *e.g*. due to the attenuation introduced by the materials of the additional layers of which this container is made and/or to the attenuation introduced by the materials of any other object stored in the container together with the mmW-enabled user device. The aforementioned drawbacks are exacerbated in crowded environments where many obstacles may threaten the positive outcome of the transmission.

US2018302138 discloses a wireless communication apparatus including a first antenna circuit that forms a beam selected from among a plurality of first beams through a beamforming process performed for communication using a millimeter wave band, and a monitor that displays a first pattern indicating a radiation direction of the selected beam.

WO2018116701 discloses that a connection possibility assessment unit assesses whether it is possible to connect to a content distribution device in a millimeter wave band. If it has been assessed as a result of the connection possibility assessment that connection is possible, then, between a time point at which content-to-be-downloaded is selected and a time point at which download is requested of the selected content-to-be-downloaded, a request signal generation unit generates a connection request signal for requesting connection to the content distribution device in a millimeter wave band and transmits the connection request signal to the content distribution device via a millimeter wave wireless unit. A control unit downloads the content-to-be-downloaded from the content distribution device via the millimeter wave wireless unit.

WO2018033136 discloses a cell handover method. The method comprises: a first network device sends a DCID and a time-frequency resource allocation of an uplink reference signal to a second network device, so that the second network device sends the DCID and the time-frequency resource allocation of the uplink reference signal to a UE; the UE can send the uplink reference signal according to the DCID and the time-frequency resource allocation of the uplink reference signal; further, the first network device sends a handover indication message to the second network device, the handover indication message comprising an identifier of a second node in a first network where the first network device is located; and the second network device sends a handover command to the UE, so as to instruct the UE transmits data with the second node.

### Summary of invention

The invention is defined by the claims.

The Applicant has found that none of the solutions known in the art is satisfactory.

In particular, the Applicant has found that none of the solutions known in the art teaches how to effectively handle exchange of digital contents over a mmW communication link in presence of fixed and/or variable obstacles.

The Applicant has faced the above-mentioned issues, and has devised a method and system for dynamically allowing digital content exchange over a mmW communication link or over a wireless communication link other than *(i.e.,* different from) the mmW communication link.

One or more aspects of the present invention are set out in the independent claims, with advantageous features of the same invention that are indicated in the dependent claims, whose wording is enclosed herein *verbatim* by reference (with any advantageous feature being provided with reference to a specific aspect of the present invention that applies *mutatis mutandis* to any other aspect).

More specifically, an aspect of the present invention relates to a method for exchanging a digital content between a communication system and a connectable device connected thereto. The communication system comprises a first base station configured to exchange the digital content over wireless communication links in a first frequency band, the frequencies of the first frequency band being higher than or equal to 6 GHz. The communication system comprises a second base station configured to exchange the digital content over wireless communication links in a second frequency band, the frequencies of the second frequency band being lower than 6 GHz. The method comprises:
*(i)* determining a position of the connectable device;
*(ii)* causing the connectable device and the first base station to attempt to establish a wireless communication link in the first frequency band therebetween;
*(iii)* if the wireless communication link in the first frequency band has been successfully established, causing the first base station to exchange the digital content with the connectable device through the established wireless communication link in the first frequency band;
*(iv)* prompting a user of the connectable device to change the position of the connectable device, if no wireless communication link in the first frequency band has been successfully established, and
*(v)* after step *(iv),* performing steps *(ii)* and *(iii).*

According to an embodiment, additional or alternative to any of the preceding embodiments, the method further comprises reiterating step *(ii)* until:
the wireless communication link in the first frequency band is established or a predetermined time period has elapsed.
According to an embodiment, additional or alternative to any of the preceding embodiments, the method further comprises reiterating
said steps *(iv)* and (v) until:
   a threshold number of iterations has been reached.

According to an embodiment, additional or alternative to any of the preceding embodiments, the method further comprises, if the threshold number of iterations has been reached and no wireless communication link in the first frequency band has been successfully established, causing the connectable device and the second base station to establish a wireless communication link in the second frequency band and causing the second base station to exchange the digital content with the connectable device through the established wireless communication link in the second frequency band.

According to an embodiment, additional or alternative to any of the preceding embodiments, said step *(v)* comprises performing step *(i)* before steps *(ii)* and *(iii).*

According to an embodiment, additional or alternative to any of the preceding embodiments, said step *(ii)* is performed after a determination that, according to the position of the connectable device determined at step *(i),* and according to historical information about historical wireless communication links in the first frequency band in that position, a successful wireless communication link in the first frequency band is expected to be established between the connectable device and the first base station.

According to an embodiment, additional or alternative to any of the preceding embodiments, the method further comprises:
if, according to the position of the connectable device determined at step (i), and according to the historical information about historical wireless communication links in the first frequency band in that position, no successful wireless communication link in the first frequency band is expected to be established between the connectable device and the first base station:
performing said prompting the user of the connectable device to change the position of the connectable device, and
performing steps *(ii)* and *(iii).*

According to an embodiment, additional or alternative to any of the preceding embodiments, for each position, the historical information comprises an indication about historical successful wireless communication links in the first frequency band that have been successfully established with the first base station in that position, and an indication about historical unsuccessful wireless communication links in the first frequency band that have been unsuccessfully established with that first base station in that position. A successful wireless communication link in the first frequency band is expected to be established between the connectable device and the first base station if a number of historical successful wireless communication links in the first frequency band in that position is higher than the number of historical unsuccessful wireless communication links in the first frequency band in that position by a predefined amount.

According to an embodiment, additional or alternative to any of the preceding embodiments, the digital content comprises one or both between:
a file available at a communication network of the communication system, and ready to be downloaded upon access by the connectable device to said communication network;
a file pushed to the connectable device upon a predetermined condition being met.

According to an embodiment, additional or alternative to any of the preceding embodiments, said step *(i)* comprises determining a current position of the connectable device or an upcoming position of the connectable device.

According to an embodiment, additional or alternative to any of the preceding embodiments, the wireless communication link in the first frequency band comprises at least one among:
a millimeter-wave communication link;
a submillimeter-wave communication link;
an optical communication link, such as an infrared, ultraviolet and/or visible light communication link, and
a WiGig communication link.

According to an embodiment, additional or alternative to any of the preceding embodiments, the wireless communication link in the second frequency band comprises at least one among:
a cellular communication link, such as a cellular communication link established using one or more among UTRA, WCDMA, CDMA2000, GERAN, LTE, LTE-Advanced, and NR radio access technologies; and
a Wi-Fi communication link.

According to an embodiment, additional or alternative to any of the preceding embodiments, the connectable device comprises:
a user device, such as a mobile phone, a smartphone, a tablet, a personal digital assistant (PDA), or a laptop computer, or
an indoor and/or outdoor machine for industrial and/or domestic applications.

Another aspect of the present invention relates to a communication system for exchanging a digital content with a connectable device connected thereto. The communication system comprises:
a first base station configured to exchange the digital content over wireless communication links in a first frequency band, the frequencies of the first frequency band being higher than or equal to 6 GHz;
a second base station configured to exchange the digital content over wireless communication links in a second frequency band, the frequencies of the second frequency band being lower than 6 GHz;
a communication network configured to:
   *(i)* determine a position of the connectable device;
   *(ii)* cause the connectable device and the first base station to attempt to establish a wireless communication link in the first frequency band therebetween;
   *(iii)* if the wireless communication link in the first frequency band has been successfully established, causing the first base station to exchange the digital content with the connectable device through the established wireless communication link in the first frequency band;
   *(iv)* prompt a user of the connectable device to change the position of the connectable device, if no wireless communication link in the first frequency band has been successfully established, and
   (v) after step (iv), perform steps *(ii)* and *(iii).*

### Brief description of the annexed drawings

These and other features and advantages of the present invention will be made apparent by the following description of some exemplary and non-limitative embodiments thereof; for its better intelligibility, the following description should be read making reference to the attached drawings, wherein:
**Figure 1** shows a communication system according to an embodiment of the present invention;
**Figure 2** shows main modules of a user device according to an embodiment of the present invention;
**Figure 3A** shows a procedure according to an embodiment of the present invention;
**Figure 3B** shows a procedure according to another embodiment of the present invention, and
**Figure 3C** shows a procedure according to another embodiment of the present invention.

### Detailed description of preferred embodiments of the invention

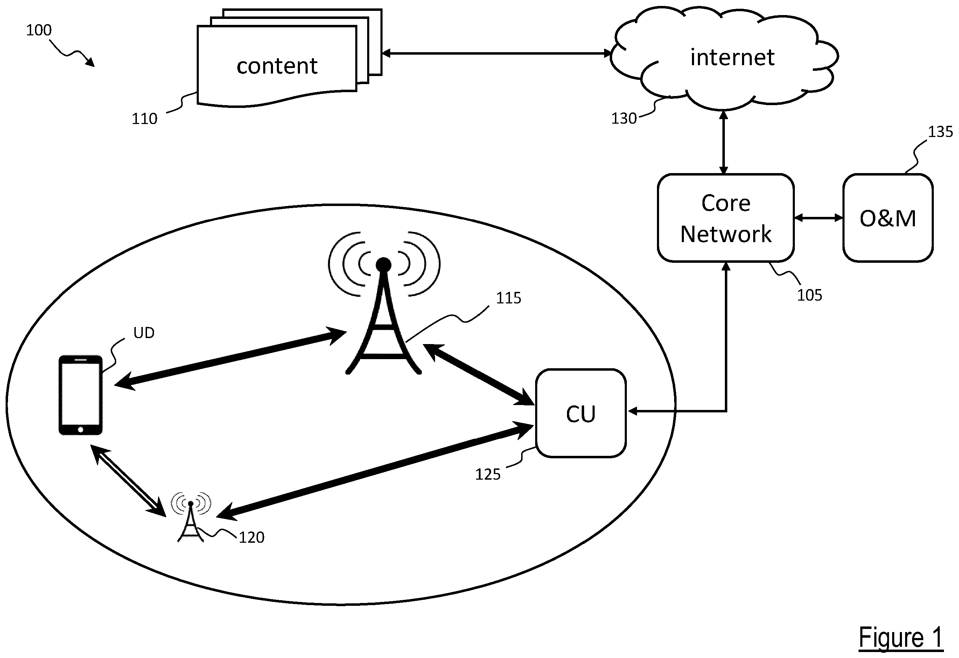

**Figure 1** shows a communication system **100** according to an embodiment of the present invention.

In the following, when one or more features of the communication system **100** (as well as of a user device or other connectable device connected thereto, and of a procedure implemented by them) are introduced by the wording "according to an embodiment", they are to be construed as features additional or alternative to any features previously introduced, unless otherwise indicated and/or unless evident incompatibility among feature combinations.

The communication system **100** is configured to exchange signals and data carried thereon with one or more users connected to the communication system **100.**

The data may for example comprise digital contents (such as voice, video, messaging and multimedia broadcast), hereinafter referred to as contents.

According to an embodiment, the communication system **100** is configured to exchange such signals with one or more connectable devices connected to the communication system **100.**

By connectable device it is herein meant a device having multi-mode communication capabilities for communicating over different communication links. For the purposes of the present disclosure, by connectable device it is herein meant a device configured to communicate at least over a millimeter-wave communication link and over one or more other wireless communication links different from the millimeter-wave communication link (as better discussed in the following).

According to an embodiment, the connectable device(s) comprise(s) user device(s), such as the user device **UD.**

According to an embodiment, the communication system **100** is configured to exchange such signals with one or more users connected to the communication system **100** through the respective user devices, such as the user device **UD.**

According to an embodiment, the communication system **100** comprises a core network **105.** The core network **105** may be any type of network configured to provide aggregation, authentication, call control / switching, charging, service invocation, gateway and subscriber database functionalities, or at least a subset (*i.e.,* one or more) thereof.

Without losing generality, the core network **105** may for example be a 4G/LTE core network or a 5G core network.

According to an embodiment, the communication system **100** comprises a content provider **110** for content transmission/reception to/from the user device **UD.**

According to an embodiment, the communication system **100** comprises a base station **115.**

The base station **115** is preferably configured to wirelessly interface with the user device **UD** to allow access thereof to the content provider **110** through one or more communication networks of the communication system **100,** thereby allowing the user to receive the contents from the content provider **110** on his/her own user device **UD.** Examples of communication networks of the communication system **100** may comprise the core network **105** and the Internet network.

According to an embodiment, the base station **115** is configured to generate and exchange (*i.e.,* transmit and/or receive) signals over cellular communication links. In the following, the signals over the cellular communication links (*e.g.,* both for establishing the cellular communication links and for content exchange over the established cellular communication links) will be also referred to as cellular signals.

The cellular communication links may be established using any suitable radio access technology. Examples of radio access technologies comprise UTRA (*"UMTS Terrestrial Radio Access*"), WCDMA ("*Wideband Code Division Multiple Access"),* CDMA2000, GERAN *("GSM EDGE Radio Access Network*")*,* LTE ("*Long Term Evolution*")*,* LTE-Advanced, and NR ("*New Radio*")*.*

Irrespective of the radio access technology, the frequency band of a cellular communication link (hereinafter referred to as cellular band) is typically below 6 GHz (sub-6 GHz frequency band) - see, for example, Tables 5.5-1 *"E-UTRA Operating Bands"* and 5.6.1-1 *"E-UTRA Channel Bandwidth"* of the latest published version of the 3GPP TS 36.101. for the purposes of the present disclosure, by sub-6 GHz frequency band it is intended that the frequencies of i*(i.e.,* included in) the sub-6 GHz frequency band are below 6 GHz.

According to an embodiment, the base station **115** comprises a relatively high-power transceiver station providing radio coverage over a relatively wide geographic area (also referred to as macro cell). Just as an example, in case the communication system **100** is based on the LTE / LTE-Advanced radio access technology, the base station **115** is or comprises an eNodeB.

Although not shown, the communication system **100** may comprise one or more additional base stations: for example, according to the radio access technology or technologies of the communication system **100,** the additional base station(s) may be at least partially equivalent to or different from the base station **115.**According to an embodiment, the base station **115** and/or the additional base station(s) may be configured to communicate over wireless communication links in the sub-6 GHz frequency band other than i*(i.e.,* different from) the cellular communication link.

Just as an non-exhaustive example, additionally or alternatively to the cellular signals, the base station **115** and/or the additional base station(s) may be configured to exchange radio signals over Wi-Fi radio access technology (the 802.11 standard provides distinct sub-6 GHz frequency bands for use in Wi-Fi radio access technology (such as 2.4 GHz and 5 GHz), *i.e.* the base station **115** and/or the additional base station(s) may be configured to exchange signals over Wi-Fi communication links.

According to an embodiment, the communication system **100** comprises, *e.g*. within the macro cell, a base station **120.**

According to an embodiment, the base station **120** comprises a lower-power, smaller coverage transceiver station.

According to an embodiment, the base station **120** is configured to exchange (*i.e.,* transmit and/or receive) signals over millimeter-wave (mmW) wireless communication links (hereinafter, mmW communication links). In the following, the signals over the mmW communication links (*e.g.,* both for establishing the mmW communication link and for content exchange over the established mmW communication link) will be also referred to as mmW signals, and the geographic area over which the base station **120** provides radio coverage will also referred to as mmW cell.

Millimeter waves are radio waves with wavelength in the range of 1 mm - 10 mm, which corresponds to a frequency band (or mmW band) of 30 GHz - 300 GHz (also referred to as *"Extremely High Frequency"* (EHF) band).

Although in the present disclosure the base station **120** is exemplary assumed to exchange mmW signals over mmW communication links, this should not be construed limitatively. Indeed, without losing generality, the base station **120** may be configured to exchange signals in any frequency bands above 30 GHz.

Just as a non-exhaustive example, additionally or alternatively to the mmW signals, the base station **120** may be configured to exchange radio signals over submillimeter-wave wireless communication links, *i.e.* the base station **120** may be configured to exchange radio signals over one or more submillimeter communication links. Submillimeter waves are radio waves with wavelength in the range of 0.1 mm to 1 mm, which corresponds to a frequency band of 300 GHz to 3 THz (also referred to as *"Terahertz or Tremendously High Frequency"* (THF) band).

Just as another non-exhaustive example, additionally or alternatively to mmW signals (and/or to the radio signals over submillimeter-wave wireless communication links), the base station **120** may be configured to exchange light signals, such as infrared (IR), visible (LiFi) and/or ultraviolet (UV) light signals, *i.e.* the base station **120** may be configured to exchange light signals over one or more optical communication links. The IR, LiFi and UV light signals are electromagnetic waves with wavelength in the range of 100 nm to 100 µm, which corresponds to a frequency band of 3 THz to 3 PHz.

Just as further non-exhaustive example, additionally or alternatively to mmW signals (and/or to the radio signals over submillimeter-wave wireless communication links and/or to the light signals), the base station **120** may be configured to exchange radio signals over WiGig (also referred to as 60GHz Wi-Fi) communication links.

According to a basic embodiment, the base station **120** may be configured to exchange signals in any frequency band above 6 GHz, *i.e.* an over-6 GHz frequency band (*i.e.,* a frequency band whose frequencies are above 6 GHz), as opposed to the sub-6 GHz frequency band over which the base station **115** is configured to exchange signals. In any case, the 6 GHz frequency band should not be construed as a fixed frequency band discriminant or threshold, in that, according to the implemented radio access technologies, the base station **115** may be configured to exchange signals in a frequency band below a lower frequency band and the base station **120** may be configured to exchange signals in a frequency band above an upper frequency band, the upper frequency band being for example equal to or higher than the lower frequency band. Just as an example, the base station **115** may be configured to exchange signals in a frequency band below 10 GHz and the base station **120** may be configured to exchange signals in a frequency band above 10 GHz, or above 20 GHz or above 30 GHz.

In the following, in accordance with the exemplary considered scenario in which the base station **115** is configured to transmit cellular signals over one or more cellular communication links and the base station is configured to transmit mmW signals over one or more mmW communication links, the base station **115** and the base station **120** will be referred to as cellular base station **115** and mmW base station **120,** respectively.

According to an embodiment, the cellular base station **115** and the mmW base station **120** are part of the radio access network.

According to an embodiment, the radio access network architecture is split into two kinds of entities, *i.e.* a central unit (CU) **125** and one or more distributed units (DU) controlled by the central unit **125** to enhance the communication network flexibility.

According to an embodiment, the central unit **125** is configured to control the cellular base station **115** and the mmW base station **120,** the cellular base station **115** and the mmW base station **120** thus acting as distributed units of the radio access network.

Just as an example, the central unit **125** may be an eNB CU or a ng-eNB CU depending on whether it is communicably coupled to a 4G/LTE core network or to a 5G Core network, respectively, the cellular base station **115** may be an eNB DU or a gNB DU depending on whether it is implemented according to LTE or NR radio access technologies, respectively, and the mmW base station **120** may be a gNB DU in that it is implemented according to NR radio access technology.

According to an embodiment, the radio access network may also comprise other base stations and/or network elements (not shown), for example remote radio units (RRU) that are integrated with the distributed units in **Figure 1****.** According to different embodiments CU, DU and RRU can be integrated/colocated or kept in different location (e.g., independent CU, DU, RRU, or colocated CU and DU, or RRU and DU integration, or CU, DU and RRU integration) as reported in ITU Technical Report *"Transport network support of IMT-2020*/*5G".*

According to an embodiment, the radio access network, and particularly the central unit **125** thereof, may be generally communicably coupled with one or more core networks, such as the core network **105.** According to an embodiment, the core network **105** may be coupled with other networks, such as the Internet network **130.**

In the exemplary considered embodiment, the content provider **110** is communicably coupled to the Internet network **130.** Additionally or alternatively, the content provider **110** may be communicably coupled to any communication network. Moreover, although the content provider **110** has been exemplary illustrated as external to the communication networks, embodiments are not excluded in which the content provider **110,** or at least a subset of functionalities thereof, is physically or logically located within one or more communication networks and/or other entities of the communication system **100.**

For the purposes of the present disclosure, the central unit **125** is configured, *e.g.* under core network instructions, to route contents from the content provider **110** and available at the core network **105** to either the cellular base station **115** or to the mmW base station **120** (so as to allow content transmission to the user device through a cellular communication link or a mmW communication link, respectively).

According to an embodiment, the user device **UD** comprises multi-mode communication capabilities for communicating over different communication links. For the purposes of the present disclosure, the user device **UD** may be configured to communicate both with the mmW base station **120** over the mmW communication link and with the cellular base station **115** over the cellular communication link (or over any other wireless communication link different from the mmW communication link).

The user device **UD** may for example be a mobile phone, a smartphone, a tablet, a personal digital assistant (PDA), or a laptop computer, or any other portable or mobile device having processing, input/output and memory modules adapted to support different messaging protocols (such as push notifications), as well as to run software applications (*e.g*., mobile applications in the example at issue of a mobile device as user device **UD**).

The user device **UD** is associated with a user, the user being for example the owner of the user device **UD.** In the example at issue of a mobile device as user device **UD,** the user device **UD** and the associated user are assumed to be in the same position, whereby in the following reference will be indifferently made to position of the user or position of the user device **UD.**

According to an embodiment, not shown, the user device **UD** is communicably coupled to an external device provided with notification functionalities, *i.e*. a notification device, external to the user device **UD,** configured to deliver notification to the user in an immediate manner and with reduced human intervention. According to an embodiment, the external notification device comprises one or more wearable smart devices (such as a smartwatch, a wristband, a ring, in-ear headphones). As should be understood, when the user device **UD** is a device other than a smartphone (such as a laptop or a tablet), the external notification device may comprise a smartphone.

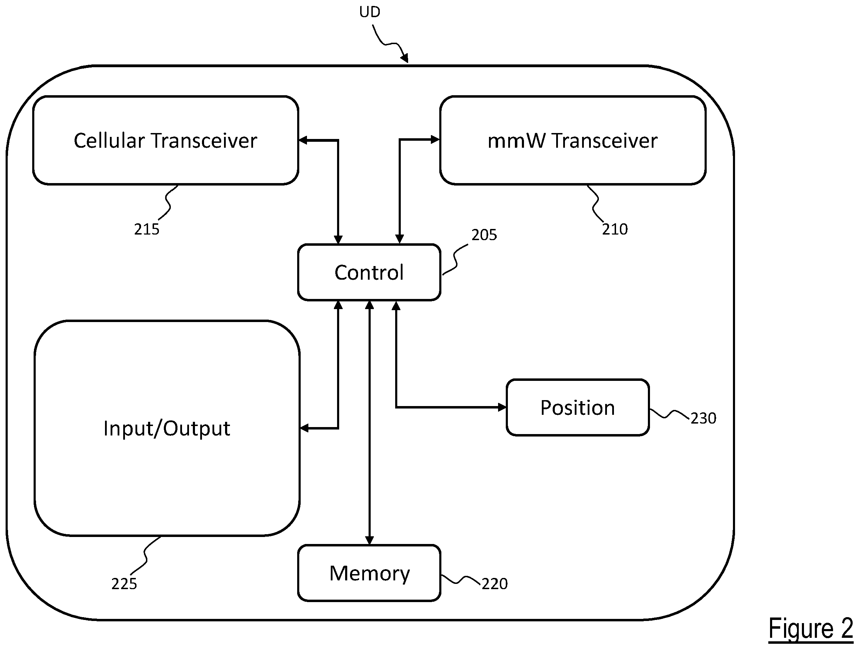

**Figure 2** shows main modules of the user device **UD** according to an embodiment of the present invention. The term "module" is herein intended to emphasize functional (rather than implementation) aspects thereof. Indeed, without losing generality, each module, according to its function, may be implemented by software, hardware, and/or a combination thereof. Moreover, the modules (or at least a subset thereof) may also reflect, at least conceptually, the physical structure of the user device **UD.** In any case, it will be appreciated that one or more of the illustrated modules may be integrated together in a single electronic package or chip.

For the sake of conciseness, only modules of the user device **UD** that are deemed relevant for the understanding of the present invention are shown in **Figure 2** and will be discussed here below, with other well-known modules and/or components of the user device **UD** that have been intentionally omitted.

According to an embodiment, the user device **UD** comprises a control module **205.** The control module **205** is preferably configured to control an overall operation of the user device **UD,** *e.g.* by controlling the modules of the user device **UD** discussed here below, or at least a subset (*i.e.,* one or more) thereof.

Just as an example, the control module **205** may perform signal coding, data processing, power control, input/output processing, and/or any other functionality enabling the user device **UD** to operate in a wireless environment.

According to an embodiment, the control module **205** comprises a processor. The processor may comprise a general purpose processor, a special purpose processor, a conventional processor, a digital signal processor (DSP), a microcontroller, ASIC ("*Application Specific Integrated Circuit*") circuits, FPGA ("*Field Programmable Gate Array*") circuits, or a combination thereof.

According to an embodiment, the user device **UD** comprises a transceiver module (hereinafter referred to as mmW transceiver module) **210** configured to transmit and receive mmW signals (*i.e.,* signals over one or more mmW communication links).

The mmW transceiver module **210** may for example comprise an antenna system (not shown) for transmitting and receiving mmW signals, a receiver for converting the received mmW signals into baseband signals and demodulating them, and a transmitter for converting the baseband signals into mmW signals and transmitting them through the antenna system.

According to an embodiment, the user device **UD** comprises a transceiver module **215** configured to transmit and receive signals over a wireless communication link other than the mmW communication link. According to the exemplary considered embodiment, the transceiver module **215** is configured to transmit and receive cellular signals over one or more cellular communication links, whereby it will be referred to as cellular transceiver module **215.**

The cellular transceiver module **215** may for example comprise an antenna system (not shown) for transmitting and receiving cellular signals, a receiver (not shown) for converting the received cellular signals into baseband signals and demodulating them, and a transmitter (not shown) for converting the baseband signals into cellular signals and transmitting them through the antenna system.

Additionally or alternatively to the cellular transceiver module **215,** the user device **UD** may comprise one or more wireless transceiver modules (not shown) configured to exchange wireless signals (or combinations thereof) other than the cellular signals. Just as an example, the wireless transceiver module(s) may be configured to exchange light signals (such as infrared (IR), ultraviolet (UV) and/or visible light signals) and/or Wi-Fi signals.

According to an embodiment, the user device **UD** comprises a memory module **220.** For the purposes of the present disclosure, the memory module **220** is preferably configured to store and run software applications (*e.g*., mobile applications in the example at issue of a mobile device as user device **UD).**

According to an embodiment, the memory module **220** comprises a non-removable memory (not shown). The non-removable memory may for example comprise a RAM ("*Random-Access Memory*") memory, and/or a ROM ("*Read-Only Memory*") memory, and/or a hard disk, and/or any other type of memory storage device.

According to an embodiment, the memory module **220** comprises a removable memory (not shown). The removable memory may for example comprise a SIM ("*Subscriber Identity Module*") card, and/or a memory stick, and/or a SD ("*Secure Digital*") memory card.

According to an embodiment, the user device **UD** comprises input/output modules **225** preferably configured to allow data input and output. The input/output modules may for example comprise one or more among a speaker/microphone, a keypad, and/or a display/touchpad.

According to an embodiment, the user device **UD** comprises a position module 230, which may for example be configured to provide position information regarding a position of the user device **UD.** The position information may for example comprise a geographic position of the user device **UD.** The geographic position may for example be expressed in terms of geographic coordinates (such as longitude, latitude and altitude).

According to an embodiment, the position module **230** comprises a GPS receiver, the position information for example comprising GPS signals received at the GPS receiver.

Additionally or alternatively, the user device **UD** may receive the position information (or at least a part thereof) from a base station (such as the cellular base station **115**) and/or determine the position of the user device **UD** based on the timing of signals received from two or more nearby base stations.

Additionally or alternatively, the user device **UD** may receive the position information (or at least a part thereof) from sensing devices (not shown) provided along one or more predefined paths that may be followed by the user: just as an example, the predefined path may be a guided touristic tour, or the predefined entrance/exit path to a train station or an airport terminal or a cruise terminal or a tourist attraction.

According to an embodiment, the position information comprises information regarding a current position of the user device **UD.**

According to an embodiment, the position information comprises information regarding an upcoming position of the user device **UD.** By upcoming position of the user device **UD** it is herein meant the position that the user device **UD** is expected to take after the current position. The upcoming position may for example be determined based on the predefined path the user device **UD** is following. According to an embodiment, the upcoming position is determined based on the predefined path and on a current stage the user is actually taking in the predefined path. The current stage may for example be determined based on the current position of the user device **UD.**

In the following, reference will be also made to a current/upcoming position of the user device **UD** when distinguishing between the current and upcoming positions of the user device **UD** is not relevant for the understanding of the present invention.

Although not shown, the user device **UD** may comprise peripherals modules (not shown), which may comprise one or more software and/or hardware modules that provide additional features, additional functionalities and/or additional wired or wireless connectivity. Just as an example, the additional peripherals may comprise one or more among an accelerometer, an e-compass, a satellite transceiver, a digital camera (for photographs or video), a USB ("*Universal Serial Bus*") port, a vibration device, a television transceiver, a Bluetooth module, a frequency modulated (FM) radio unit, a digital music player, a media player, a video game player module, an Internet browser, and the like.

Back to **Figure 1****,** according to an embodiment the communication system **100** comprises an Operation & Maintenance (O&M) module **135** communicably coupled to the core network **105.**

According to an embodiment, the O&M module **135** is configured to gather, store and provide to the core network **105** information about historical mmW communication links (hereinafter, historical mmW information). According to alternative embodiments, the historical mmW information may be generated and stored at any entity external to the O&M module **135,** the historical mmW information being for example generated and stored externally to the O&M module **135** based on data provided (*e.g*., periodically or aperiodically) by the O&M module **135.**

According to an embodiment, the historical mmW information may comprise, for each position taken by user devices, outcomes (*e.g.*, successful or unsuccessful) of past attempts (by the user devices) to connect to the mmW base station **120** for establishing a mmW communication link. In other words, the historical mmW information may comprise, for each position taken by the user devices during the past attempts to connect to the mmW base station **120,** indications about historical mmW communication links successfully established with that mmW base station (or successful historical mmW communication links) and indications about historical mmW communication links unsuccessfully established with that mmW base station (or unsuccessful historical mmW communication links).

According to an embodiment, the communication system **100** is configured to implement a procedure or method aimed at managing communication links over which content transmission to/from the user device **UD** may take place (as better discussed here below).

The procedure may for example be carried out at the core network **105,** or at an entity external to the core network **105** and communicably coupled to both the core network 105 and the O&M module **135.**

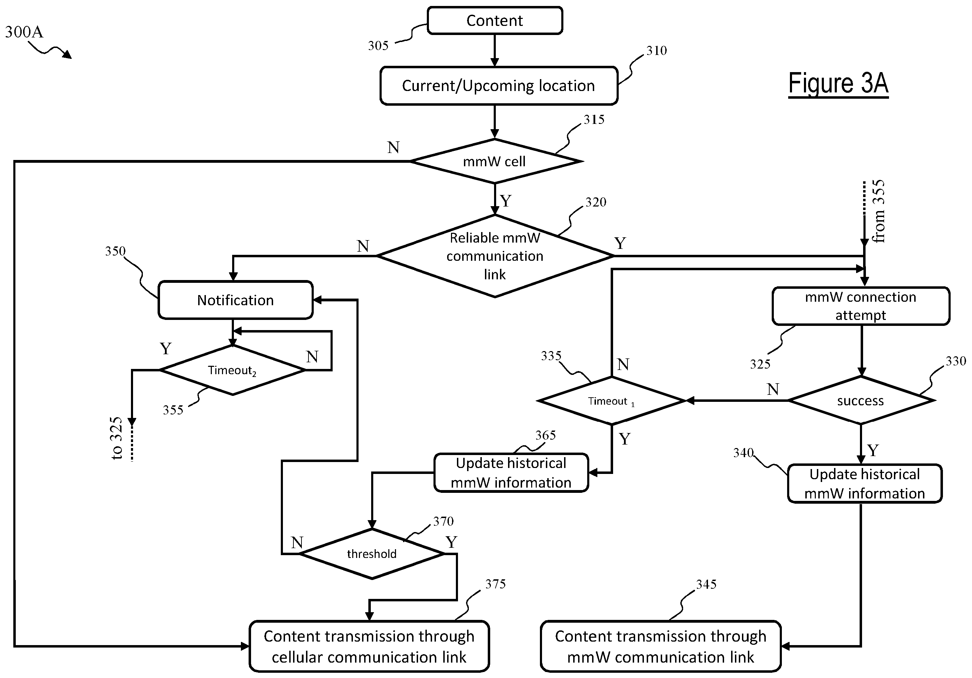

**Figure 3A** shows a procedure or method **300A** according to an embodiment of the present invention.

Broadly speaking, the procedure **300A** is aimed at managing (*e.g*., allowing or preventing) content exchange between the user device **UD** and the mmW base station **120** over the mmW communication link or between the user device and the cellular base station **115** over the cellular communication link. In the following, the practical case of a content to be transmitted to the user device **UD** will be considered by way of example only.

As mentioned above, the content may for example comprise voice, video, messaging and multimedia broadcast.

The content may have any size: however, as will be apparent from the following discussion, the procedure **300A** is particularly advantageous when the content has a relatively large size (*e.g.,* more than 0.5 GB).

According to a first exemplary content transmission scenario (hereinafter referred to as content download scenario), the content from the content provider **110** is a file (such as an e-mail attachment) available at a communication network (such as the core network **105** and the Internet network **130**), and ready to be downloaded upon access by the user device **UD** to that communication network (*e.g*., upon access by the user device **UD** to the e-mail service). By content download it is herein meant the transmission of contents in response to the user actively (*i.e.,* purposely) requesting it through his/her own user device **UD.**

According to a second exemplary content transmission scenario (hereinafter referred to as content push scenario), the content from the content provider **110** may be a file pushed to the user device **UD** (*e.g.,* through a mobile application running on it) upon a predetermined condition being met. By content push it is herein meant the automatic (*i.e.,* autonomous) transmission of contents by the communication network (such as the core network **105** and the Internet network **130**) in response to the predetermined condition, whereby the user passively receives the content on his/her own user device **UD** upon the predetermined condition being met.

According to an embodiment, in the content push scenario the automatic (*i.e.,* autonomous) transmission of contents by the communication network is authorized at a previous phase, such as a service registration phase.

According to an embodiment, the predetermined condition comprises a predetermined position that, when taken by the user device **UD,** triggers content push to the user device **UD.**

The predetermined position may for example be the current/upcoming position of the user device **UD** within a geographic area (for example, the macro cell identified by the cellular base station **115,** or the current/upcoming position of the user device **UD** along one or more predefined paths the user device **UD** is following (such as a guided touristic tour, and/or a predefined entrance/exit path to a train station and/or an airport terminal and/or a cruise terminal or and/a tourist attraction).

In either or both cases, the user may for example download a corresponding mobile application on his/her user device **UD** (for example, a mobile application designed to guide the user along one or more predefined paths), perform the service registration phase (*e.g*., through the mobile application itself), authorize the mobile application (*e.g*., through the mobile application itself) to push notifications (hereinafter, notification authorization) and, preferably, to select (*e.g*., through the mobile application itself) one or more classes or types of contents to be notified, when available, to the user device **UD.**

According to an embodiment (not shown), the user may grant (confirm) or deny the notification authorization by touching or selecting a corresponding box during a configuration procedure of the mobile application. Additionally or alternatively, the user may grant (confirm) or deny the notification authorization at a later stage, *e.g.* at any time after the configuration procedure: just as an example, the user may grant (confirm) or deny the notification authorization by accessing a corresponding menu option of the user device **UD** and/or of the mobile application.

Back to the procedure **300A,** reference will be generically made, by way of example only, to a content that has to be transmitted to the user device **UD,** irrespective of the considered content transmission scenario (*e.g*., content download scenario or content push scenario). As will be properly illustrated while discussing the procedure steps, some of the procedure steps may differ depending on the considered content transmission scenario.

According to an embodiment, the procedure **300A** starts when a content that has to be transmitted from the content provider **110** to the user device **UD** is made available at the communication network (action node **305**).

According to an embodiment, the position (*e.g*., the current/upcoming) of the user device **UD** is determined (action node **310**).

According to an embodiment, the current/upcoming position of the user device **UD** is determined at user device side. As discussed above, the current/upcoming position of the user device **UD** may for example be based on position information received at the position module **230** of the user device **UD.**

According to an embodiment, the current/upcoming position of the user device **UD** is communicated to the core network **105,** preferably through the cellular base station **115** (and the central unit **125**).

According to an embodiment, when considering the content push scenario, the current/upcoming position of the user device **UD** may be already available at the core network 105 before the content from the content provider **110** is made available at the communication network (*i.e.,* before action node), in that in such a scenario the current/upcoming position of the user device **UD** may have triggered content availability.

According to an embodiment, a check is performed (*e.g.,* at the core network **105**) for checking whether, *e.g*. according to the determined current/upcoming position of the user device **UD,** the user device **UD** is/will be within a mmW cell (decision node **315**), for example in that a mmW base station with which a mmW communication link can be established for content transmission is available near the location of the user device **UD.**

According to an embodiment, if, according to the determined current/upcoming position of the user device **UD,** the user device **UD** is not/will not be within a mmW cell (exit branch **N** of the decision node **315**), which means that no mmW base station with which a mmW communication link can be established for content transmission is available near the location of the user device **UD,** content transmission from the communication network to the user device preferably takes place through a cellular communication link (or through any wireless communication link other than the mmW communication link) established between the user device **UD** and the base station **115** - action node **375.** In other words, if, according to the determined current/upcoming position of the user device **UD,** the user device **UD** is not/will not be within a mmW cell, the cellular base station **115** is caused to transmit the content to the user device **UD.**

According to an embodiment, information about the progress of the content transmission is provided to the user, for example in the form of an advancement bar displayed on the user device **UD.**

According to an embodiment, if, according to the determined current/upcoming position of the user device **UD,** the user device **UD** is /will be within a mmW cell (exit branch Y of the decision node **315**), which means that a mmW base station with which a mmW communication link can be established for content transmission is available near the location of the user device **UD,** a check is performed i*(e.g.,* at the core network **105**) for checking a reliability of a mmW communication link in that current/upcoming position of the user device **UD** (decision node **320**). By reliability of a mmW communication link it is herein meant the probability that a connection to the mmW base station (for establishing the mmW communication link) is successful.

According to an embodiment, the reliability of a mmW communication link in that current/upcoming position of the user device **UD** is checked (*e.g.,* at the core network **105**) based on the historical mmW information, or at least on a subset thereof, associated with that current/upcoming position (as discussed above, the historical mmW information being for example stored in the O&M module, or at any entity external thereto, and made available, on request, at the core network **105** or at any other entity running the procedure).

Just as an example, a mmW communication link in a current/upcoming position may be considered or classified as reliable if, *e.g.* based on the historical mmW information, the number of historical successful mmW communication links in that current/upcoming position is higher than the number of historical unsuccessful mmW communication links in that current/upcoming position.

Just as another example, a mmW communication link in a current/upcoming position may be considered or classified as reliable if, *e.g.* based on the historical mmW information, the number of historical successful mmW communication links is higher than the number of historical unsuccessful mmW communication links by a predefined amount: by way of example only, in case of equal or slightly different number of historical successful mmW communication links and of historical unsuccessful mmW communication links in a certain current/upcoming position, any mmW communication link between the user device **UD** in that current/upcoming position and the mmW base station may be considered or classified unreliable. According to an embodiment, such a condition of unreliability associated with a certain current/upcoming position may be removed (so as to restore such a current/upcoming position back to a reliable position) on a periodic or aperiodic basis.

Just as a further example, additional or alternative to any of the previous examples, a mmW communication link in a current/upcoming position may be considered or classified as reliable if no historical mmW information are available for that current/upcoming position, *i.e.* if no past attempts to establish a mmW communication link in that current/upcoming position have so far performed (the mmW communication link thus being a new communication link).

Back to the decision node **320,** according to an embodiment, if, *e.g.* based on the historical mmW information, the mmW communication link in the current/upcoming position of the user device **UD** is reliable (exit branch **Y** of the decision node **320**), *i.e.* a successful mmW communication link is expected to be established between the user device **UD** and the mmW base station **120,** the user device **UD** is caused to perform a connection attempt to connect to the mmW base station **120** for establishing a mmW communication link therebetween (action node **325**).

According to an embodiment, the mmW connection attempt is reiterated until a mmW communication link is established (successful mmW connection attempt) or a predetermined time period (denoted by *"Timeout₁"* in the figure) has elapsed, whichever condition occurs first. This is schematically illustrated in the figure by action **325** and decision **330, 335** nodes: the mmW connection attempt (action node **325**) is repeated if no mmW communication link has (so far) been established (*i.e.,* if any previous mmW connection attempt has failed) (exit branch **N** of decision node **330**), and the predetermined time period *Timeout₁* has not elapsed (exit branch **N** of the decision node **335**).

According to an embodiment, if a mmW communication link has been established before the predetermined time period has elapsed (exit branch **Y** of the decision node **330**), *i.e.* successful outcome of the mmW connection attempt(s), content transmission from the communication network to the user device **UD** preferably takes place through the mmW communication link so established between the user device **UD** and the mmW base station **120** (*i.e.,* it is up to the mmW base station **120** to transmit the content to the user device **UD**) - action node **345.**

According to an embodiment, information about the progress of the content transmission is provided to the user, for example in the form of an advancement bar displayed on the user device **UD.**

According to an embodiment, upon establishing of the mmW communication link (*i.e.,* successful outcome of the mmW connection attempt(s)), the historical mmW information is accordingly updated (action node **340**).

According to an embodiment, updating of the historical mmW information comprises adding the successful outcome of the mmW connection attempt(s) to an existing mmW communication link or adding the successful outcome of the mmW connection attempt(s) to a new (*i.e.,* not yet existing) mmW communication link.

According to an embodiment, if no mmW communication link has been established (*i.e.,* all mmW connection attempts so far performed have failed) upon elapsing of the predetermined time period *Timeout₁* (exit branch **N** of the decision node **330** and exit branch **Y** of the decision node **335**), and if (exit branch **Y** of decision node **370**) a threshold number of reiterations has been reached (as discussed in the following, each reiteration comprising a notification to prompt the user device to move his/her own user device **UD** in a different position, and subsequent mmW connection attempts), content transmission from the communication network to the user device **UD** takes place through a cellular communication link (or through any wireless communication link in the sub-6 GHz frequency band other than the cellular communication link) established between the user device **UD** and the cellular base station **115** - action node **375.**

According to an embodiment, upon determining the failure of the mmW communication link (*i.e.,* unsuccessful outcome of the mmW connection attempt(s)), the historical mmW information is accordingly updated (action node **365**).

According to an embodiment, updating of the historical mmW information comprises adding the unsuccessful outcome of the mmW connection attempts to an existing mmW communication link or adding the unsuccessful outcome of the mmW connection attempts to a new (*i.e.,* not yet existing) mmW communication link.

Back to the decision node **320,** according to an embodiment, if, *e.g.* based on the historical mmW information, the mmW communication link in the current/upcoming position of the user device **UD** is considered unreliable (exit branch **N** of the decision node **320**), *i.e.* no successful mmW communication link is expected to be established between the user device **UD** and the mmW base station **120,** the user is caused (or induced or prompted) to change the position of the user device **UD** (action node **350**).

According to an embodiment, in order to cause or induce the user to change the position of the user device **UD,** a notification is delivered (*e.g*., pushed) to the user device **UD** (action node 350). As mentioned above, additionally or alternatively the notification may be delivered (*e.g*., pushed) to one or more wearable smart devices associated with the user device **UD.** According to an embodiment, the notification is delivered (*e.g*., pushed) by the communication network to the user device **UD** through standard or non-standard messaging or by means of an application/service synchronization.

According to an embodiment, the notification (and, preferably, any other signalling before the mmW connection attempt(s)) is delivered by the communication network through the base station **115**, *i.e.* through one or more cellular communication links (such as dedicated one or more cellular communication links). Therefore, according to embodiments of the present invention, the cellular signals (*i.e*. the signals in the lower, sub-6 GHz, frequency band) are exploited to try to have the user device **UD** proactively moved in a more suitable position for the reception of the mmW signals (*i.e.* the signals in the higher frequency band).

The notification may for example be a push notification, for example a banner on the top the smartphone screen, a pop up bubble or badge from the button task bar, a dialog box that interrupts and blocks the view of any front running application, and may contain text and/or vocal image message (possibly with the further playing of an alert sound to attract the attention of the user).

According to an embodiment, the notification comprises a message indicative that a content is available at the communication network and that it could be transmitted over a mmW communication link, whenever the propagation conditions of the mmW signals between the user device **UD** and the mmW base station **120** improve.

In response to this, the user may move his/her own user device **UD** in a different position that hopefully results in a successful mmW communication link.

According to an embodiment, the user is prompted to move his/her own user device **UD** in a different position essentially at his/her own discretion.

Altough it could be reasonably assumed that the user reaction to each notification is to move his/her own user device **UD** to a different position (especially at a first notification, when the user may have to grab his/her own user device **UD** from a pocket or a bag to see the notification), similar considerations apply when, in response to one or more of the notifications, the user does not move his/her own user device **UD** in a different position: indeed, meanwhile, any impediment having caused the failure of the mmW communication attempts so far performed, such as obstacles or temporary failures or faults in the mmW base station **120,** may have been removed or adjusted (without requiring any position change of the user device **UD**).

According to an embodiment (not shown), the notification also comprises one or more authorization procedures. The authorization procedure(s) may for example comprise a content authorization procedure, *i.e.* a procedure for authorizing the content transmission to the user device **UD** (content authorization), and/or a mmW authorization procedure, *i.e.* a procedure for authorizing the content transmission to the user device **UD** through a mmW communication link (mmW authorization).

According to an embodiment (not shown), the user may grant (confirm) or deny content authorization and/or the user may grant (confirm) or deny mmW authorization. Just as an example, the content and/or mmW authorization may be granted by touching on the notification or by means of other gesture (for example, by means of a sliding on the notification box), whereas the content and/or mmW authorization may be denied by performing no action on (*i.e.,* by ignoring) the notification.

According to an embodiment, the content authorization and/or the mmW authorization may considered granted if the gesture on the notification is performed within a prescribed time period, at the end of which the absence of actions on the notification may be interpreted as authorization denied.

The content authorization may be particularly (although not exclusively) advantageous in the content push scenario, *e.*g. so as to give to the user a certain degree of control on passive reception of contents on his/her own user device **UD.**

According to an embodiment, the content authorization procedure may take place when a content that has to be transmitted to the user device **UD** is made available at the communication network (action node **305**).

The mmW authorization may be particularly (although not exclusively) advantageous both in the content push scenario and in the content download scenario, *e.g.* so as to give to the user a certain degree of control on user device parameters (such as power consumption) affected by the choice of the communication link over which allowing the content transmission.

Back to action node **350,** according to an embodiment, a further predetermined time period (denoted by *"Timeout₂"* in the figure) is waited (decision node **355**), during which the user may move his/her own user device **UD** in a different position. This is schematically illustrated in the figure by loop connection between the exit branch **N** of the decision node **355** (which means that the predetermined time period *Timeout₂* has not yet elapsed) and the input thereof: as long as the predetermined time period *Timeout₂* has not elapsed (exit branch N of the decision node **355**), the user may change the position of the user device **UD.** According to an embodiment (not shown), as long as the predetermined time period *Timeout₂* has not elapsed, the user is prompted to change the position of the user device by one or more further notifications.

According to an embodiment, the further notification(s) are analogous to the notification pushed at action node **350.** Alternatively, the further notification(s) may differ from the notification pushed at action node **350** for sound and/or light and/or text indications.

According to an embodiment, not shown, a maximum number of the further notifications is set.

Additionally or alternatively, a signal from the user device **UD** indicative of a change in the position of the user device **UD** may trigger the mmW connection attempt(s) (action node **325**) before the end (or elapsing) of the predetermined time period *Timeout₂.* This may for example be performed by exploiting one or more sensors of the user device **UD,** when provided. Just as an example, a signal from the user device **UD** indicative of a change in the position of the user device **UD** may be generated in response to user device acceleration and/or orientation changes being sensed by proper accelerometers and/or gyroscopes.

According to an embodiment, after the predetermined time period *Timeout₂* has elapsed, during which the user may have moved his/her own user device **UD** in a different position, or upon a signal from the user device **UD** indicative of a change in the position of the user device **UD,** one or more further mmW connection attempts are performed (by the user device **UD**) to connect to the mmW base station **120** for establishing a mmW communication link (*e.g.,* based on such a different position, if the user has actually moved his/her own user device **UD**). According to an embodiment, the further mmW connection attempt(s) are reiterated as discussed above in connection with action **325** and decision **330, 335** nodes: this is schematically illustrated in the figure by a connection between decision node **355** and action node **325.**

Back to decision node **335,** according to an embodiment, if no mmW communication link has been established (*i.e.,* all mmW connection attempts so far performed have failed) upon elapsing of the predetermined time period *Timeout₁* (exit branch **N** of the decision node **330** and exit branch **Y** of the decision node **335**), the user is prompted to change the position of the user device **UD** and one or more mmW connection attempts are performed based on the changed position of the user device **UD.**

According to an embodiment, the user is prompted to change the position of the user device **UD** as discussed above in connection with action node **350** and decision node **355:** a notification is delivered (*e.g*., pushed) to the user device **UD** (action node **350**), in response to the notification (and within the predetermined time period *Timeout₂* - decision node **355**) the user may move his/her own user device **UD** in a different position, and the mmW connection attempt(s) are reiterated (action **325** and decision **330, 335** nodes) for the changed position until a mmW communication link has been established (exit branch **Y** of the decision node **330**) or the predetermined time period *Timeout₁* has elapsed (exit branch **Y** of the decision node **335**), whichever condition occurs first.

According to an embodiment, the notification(s) (action node **350**), the waiting for changes in the position of the user device **UD** for the predetermined time period *Timeout₂* (decision node **355**), and the subsequent mmW connection attempt(s) (nodes **325-335**) are reiterated until a mmW communication link is established (successful mmW connection attempt, exit branch **Y** of decision node **330**) or a threshold number of reiterations has been reached (exit branch **Y** of decision node **370**), whichever condition occurs first. This is schematically illustrated in the figure by loop connection between the decision node **370** and the action node **350:** as long as the threshold number of iterations has not been reached (exit branch **N** of the decision node **370**), the user is prompted (or induced) to change the position of the user device **UD** and mmW connection attempt(s) based on the changed position are performed.

According to an embodiment, not shown, after the user is prompted to move his/her own user device **UD,** the current/upcoming location of the user device **UD** may be (re)determined (action node **310**) and the procedure **300A** would be resumed as discussed above in connection with nodes **315-375:** in other words, in this embodiment, the exit branch Y of the decision node **355** would be connected to action node **310** instead of action node **325.** Thanks to this embodiment, a check is re(performed) to check whether the user device **UD** is/will be still within the mmW cell (decision node **315**), in that the movement of the user / user device **UD** could result in a position that is outside the mmW cell.

Back to decision node **335,** if the predetermined time period *Timeout₁* has elapsed (exit branch **Y** of the decision node 33**5**), which means an unsuccessful outcome of the mmW connection attempt(s) for the current position of the user device **UD,** the historical mmW information is accordingly updated (action node **365**) and, if the threshold number of iterations has been reached (exit branch **Y** of the decision node **370**), content transmission from the communication network to the user device **UD** takes place through a cellular communication link (or through any wireless communication link other than the mmW communication link) established between the user device **UD** and the cellular base station **115** (action node **375**).

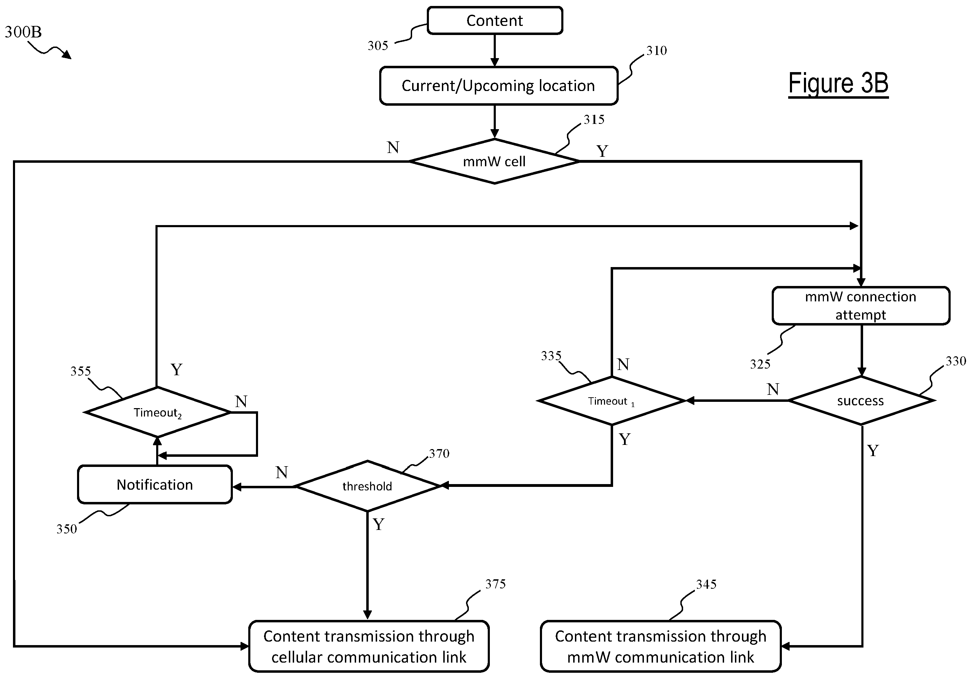

With reference now to **Figure 3B****,** it shows a procedure **300B** according to another embodiment of the present invention.

The procedure **300B** is similar to the procedure **300A,** reason why same procedure steps have been denoted by same number references and their explanation will not be repeated for the sake of conciseness.

The procedure **300B** differs from the procedure **300A** essentially in that no check is performed for checking the reliability of the mmW communication link in a current/upcoming position of the user device **UD** (*i.e.* no decision node **320** is provided in the activity diagram of **Figure 3B**). Thus, in the embodiment of **Figure 3B****,** if, according to the determined current/upcoming position of the user device **UD,** the user device **UD** is /will be within a mmW cell (exit branch **Y** of the decision node **315**), which means that a mmW base station with which a mmW communication link can be established for content transmission is available near the location of the user device **UD,** mmW connection attempts are performed (action node **325**) until a mmW communication link is established (exit branch **Y** of decision node **330**) or the predetermined time period *"Timeout₁"* has elapsed (exit branch **Y** of the decision node **335**), whichever condition occurs first, and notifications (nodes **350** and 35**5**) and subsequent mmW connection attempts are reiterated until a mmW communication link is established (exit branch **Y** of decision node **330**) or the threshold number of iterations has been reached (exit branch **Y** of decision node 37**0**), whichever condition occurs first.

The embodiment of **Figure 3B** may for example be implemented when it is desired or required that the managing (or selection) of the communication links over which content transmission to/from the user device **UD** may take place is not based on historical mmW information. For this reason, no procedure step concerning the mmW historical information (such as the steps of storing/updating the mmW historical information at action nodes **340** and **365** of procedure **300A**) is provided in the activity diagram of **Figure 3B****.**

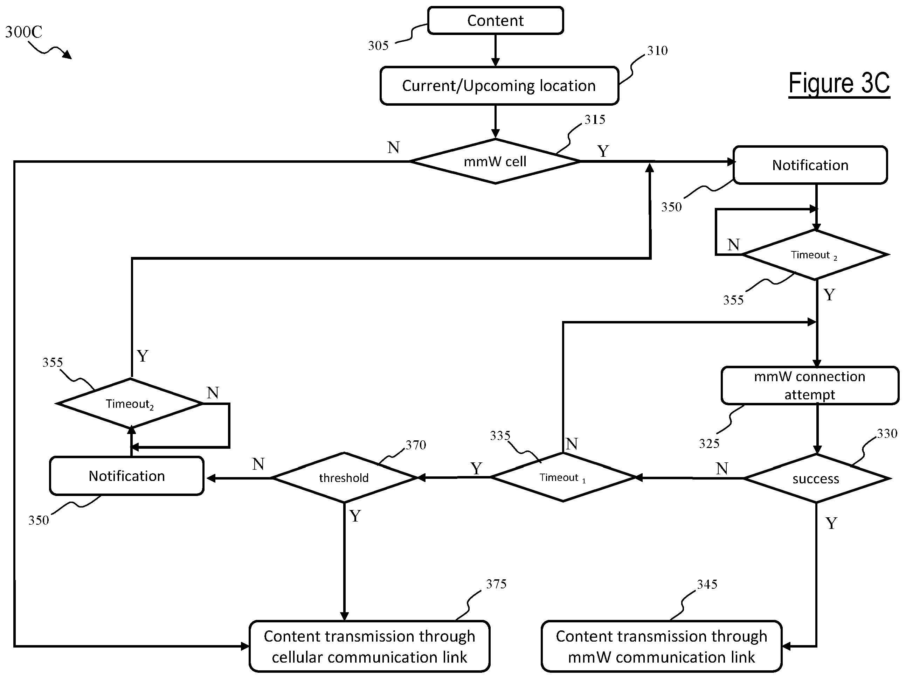

With reference now to **Figure 3C****,** it shows a procedure **300C** according to another embodiment of the present invention.

The procedure **300C** is similar to the procedure **300B,** reason why same procedure steps have been denoted by same number references and their explanation will not be repeated for the sake of conciseness.

The procedure **300C** differs from the procedure **300B** essentially in that the notification at action node **350** takes place before any mmW connection attempt. Thus, in the embodiment of **Figure 3C****,** if, according to the determined current/upcoming position of the user device **UD,** the user device **UD** is /will be within a mmW cell (exit branch **Y** of the decision node **315**), a (first) notification is delivered (*e.g*., pushed) to the user device **UD** (action node **350**) in order to inform the user of the availability of a mmW communication link, and, after the predetermined time period *Timeout₂* has elapsed during which the user may grab his/her own user device **UD** to see the notification (exit branch **Y** of the decision node **355**), the mmW connection attempt(s) are reiterated (action **325** and decision **330, 335** nodes) until a mmW communication link has been established (exit branch **Y** of the decision node **330**) or the predetermined time period *Timeout₁* has elapsed (exit branch **Y** of the decision node **335**), whichever condition occurs first.

The embodiment of **Figure 3C** may for example be implemented when it is desired or required that the user is immediately notified of the availability of a mmW communication link near the location of the user device **UD.** Moreover, in this embodiment the first notification may also be regarded as having a trigger function: indeed, the action of grabbing the user device **UD** (*e.g.,* from a pocket or a bag) to see the notification inherently causes a movement of the user device **UD** to a different position - as should be understood, the trigger function of the first notification may also be envisaged in the embodiments of **Figures 3A** and **3B****.**

Similarly to the embodiments of **Figure 3A** and **3B****,** the procedure **300C** may provide multiple iterations, for example each one starting with a respective notification to prompt the user to change the position of his/her own user device **UD:** as long as the threshold number of iterations has not been reached (exit branch **N** of the decision node **370**), the user is prompted (or induced) to change the position of the user device **UD** and mmW connection attempt(s) based on the changed position are performed (action node **325** and decision nodes **330, 335**).

Naturally, in order to satisfy local and specific requirements, a person skilled in the art may apply to the invention described above many logical and/or physical modifications and alterations. More specifically, although the present invention has been described with a certain degree of particularity with reference to preferred embodiments thereof, it should be understood that various omissions, substitutions and changes in the form and details as well as other embodiments are possible. In particular, different embodiments of the invention may even be practiced without the specific details set forth in the preceding description for providing a more thorough understanding thereof; on the contrary, well-known features may have been omitted or simplified in order not to encumber the description with unnecessary details. Moreover, it is expressly intended that specific elements and/or method steps described in connection with any disclosed embodiment of the invention may be incorporated in any other embodiment.

More specifically, the present invention lends itself to be implemented through an equivalent method (by using similar steps, removing some steps being not essential, or adding further optional steps); moreover, the steps may be performed in different order, concurrently or in an interleaved way (at least partly).

Moreover, although in the foregoing explicit reference has been exemplary made to a user device as a connectable device, the principles of the present invention equivalently apply to other connectable devices or apparatuses other than user devices. Examples of such connectable devices or apparatuses comprise indoor and/or outdoor machines for industrial and/or domestic applications (such as industrial robots, warehouse robots, service robots, vacuum cleaning/floor washing robots) capable of communicating over mmW communication links, wherein the mmW communication links may fail due to obstacles encountered during movement of the machines.

In these applications, the notifications discussed above may also include indications or commands to move from a current location to another one, for example indications or commands to move from the current location to another one temporary (*e.g.,* the time necessary to try to establish or restore a mmW communication link and allow the machine to download data, such as processing or task instructions).

## Claims

1. Method (**300A; 300B; 300C**) for exchanging a digital content between a communication system (**100**) and a connectable device (**UD**) connected thereto, wherein the communication system (**100**) comprises a first base station (**120**) configured to exchange the digital content over wireless communication links in a first frequency band, the frequencies of the first frequency band being higher than or equal to 6 GHz, and a second base station (**115**) configured to exchange the digital content over wireless communication links in a second frequency band, the frequencies of the second frequency band being lower than 6 GHz, the method comprising:
*(i)* determining (**310**) a position of the connectable device (**UD**);
*(ii)* causing (**325, 330, 335**) the connectable device (**UD**) and the first base station (**120**) to attempt to establish a wireless communication link in the first frequency band therebetween;
*(iii)* when (**330**) the wireless communication link in the first frequency band has been successfully established, causing (**345**) the first base station (**120**) to exchange the digital content with the connectable device (**UD**) through the established wireless communication link in the first frequency band;
*(iv)* delivering a notification to the connectable device to prompt (**350, 355**) a user of the connectable device (**UD**) to change the position of the connectable device (**UD**), when no wireless communication link in the first frequency band has been successfully established,
*(v)* after step *(iv),* performing steps *(ii)* and *(iii),* and
reiterating said steps *(iv)* and *(v)* until a threshold number of iterations has been reached,
the method further comprising, when the threshold number of iterations has been reached and no wireless communication link in the first frequency band has been successfully established, causing (**375**) the connectable device (**UD**) and the second base station (**115**) to establish a wireless communication link in the second frequency band and causing the second base station (**115**) to exchange the digital content with the connectable device (**UD**) through the established wireless communication link in the second frequency band.

2. The method (**300A; 300B; 300C**) according to claim 1, further comprising reiterating step *(ii)* until:
the wireless communication link in the first frequency band is established (**330**) or a predetermined time period (*Timeout₁*) has elapsed (**335**).

3. The method (**300A; 300B; 300C**) according to any of the preceding claims, wherein said step *(v)* comprises performing step *(i)* before steps *(ii)* and *(iii).*

4. The method (**300A**) according to any of the preceding claims, wherein said step *(ii)* is performed after a determination (**320**) that, according to the position of the connectable device (**UD**) determined at step *(i),* and according to historical information about historical wireless communication links in the first frequency band in that position, a successful wireless communication link in the first frequency band is expected to be established between the connectable device (**UD**) and the first base station (**120**).

5. The method (**300A**) according to claim 4, comprising:
when (**320**), according to the position of the connectable device (**UD**) determined at step *(i),* and according to the historical information about historical wireless communication links in the first frequency band in that position, no successful wireless communication link in the first frequency band is expected to be established between the connectable device (**UD**) and the first base station (**120**):
performing said delivering a notification to the connectable device to prompt (**350, 355**) the user of the connectable device (**UD**) to change the position of the connectable device (**UD**), and
performing steps *(ii)* and *(iii).*

6. The method (**300A**) according to claim 4 or 5, wherein, for each position, the historical information comprises an indication about historical successful wireless communication links in the first frequency band that have been successfully established with the first base station (**120**) in that position, and an indication about historical unsuccessful wireless communication links in the first frequency band that have been unsuccessfully established with that first base station (**120**) in that position, wherein a successful wireless communication link in the first frequency band is expected to be established between the connectable device (**UD**) and the first base station (**120**) if (**320**) a number of historical successful wireless communication links in the first frequency band in that position is higher than the number of historical unsuccessful wireless communication links in the first frequency band in that position by a predefined amount.

7. The method (**300A; 300B; 300C**) according to any of the preceding claims, wherein the digital content comprises one or both between:
a file available at a communication network (**105, 130**) of the communication system, and ready to be downloaded upon access by the connectable device (**UD**) to said communication network;
a file pushed to the connectable device (**UD**) upon a predetermined condition being met.

8. The method (**300A; 300B; 300C**) according to any of the preceding claims, wherein said step *(i)* comprises determining a current position of the connectable device or an upcoming position of the connectable device (**UD**).

9. The method (**300A; 300B; 300C**) according to any of the preceding claims, wherein the wireless communication link in the first frequency band comprises at least one among:
a millimeter-wave communication link;
a submillimeter-wave communication link;
an optical communication link, such as an infrared, ultraviolet and/or visible light communication link, and
a WiGig communication link.

10. The method (**300A; 300B; 300C**) according to any of the preceding claims, wherein the wireless communication link in the second frequency band comprises at least one among:
a cellular communication link, such as a cellular communication link established using one or more among UTRA, WCDMA, CDMA2000, GERAN, LTE, LTE-Advanced, and NR radio access technologies; and
a Wi-Fi communication link.

11. The method (**300A; 300B; 300C**) according to any of the preceding claims, wherein the connectable device (**UD**) comprises:
a user device, such as a mobile phone, a smartphone, a tablet, a personal digital assistant (PDA), or a laptop computer, or
an indoor and/or outdoor machine for industrial and/or domestic applications.

12. A communication system (**100**) for exchanging a digital content with a connectable device (**UD**) connected thereto, the communication system (**100**) comprising:
a first base station (**120**) configured to exchange the digital content over wireless communication links in a first frequency band, the frequencies of the first frequency band being higher than or equal to 6 GHz;
a second base station (**115**) configured to exchange the digital content over wireless communication links in a second frequency band, the frequencies of the second frequency band being lower than 6 GHz;
a communication network (**105**) configured to:
*(i)* determine a position of the connectable device (**UD**);
*(ii)* cause the connectable device (**UD**) and the first base station (**120**) to attempt to establish a wireless communication link in the first frequency band therebetween;
*(iii)* when the wireless communication link in the first frequency band has been successfully established, causing the first base station to exchange the digital content with the connectable device (**UD**) through the established wireless communication link in the first frequency band;
*(iv)* deliver a notification to the connectable device to prompt a user of the connectable device (**UD**) to change the position of the connectable device (**UD**), when no wireless communication link in the first frequency band has been successfully established,
*(v)* after step *(iv),* perform steps *(ii)* and *(iii),* and
reiterating said steps *(iv)* and *(v)* until a threshold number of iterations has been reached,
the communication network (**105**) being further configured to, when the threshold number of iterations has been reached and no wireless communication link in the first frequency band has been successfully established, cause the connectable device (**UD**) and the second base station (**115**) to establish a wireless communication link in the second frequency band and cause the second base station (**115**) to exchange the digital content with the connectable device (**UD**) through the established wireless communication link in the second frequency band.

## Patentansprüche

1. Verfahren (300A; 300B; 300C) zum Austauschen eines digitalen Inhalts zwischen einem Kommunikationssystem (100) und einer verbindbaren Vorrichtung (UD), die damit verbunden ist, wobei das Kommunikationssystem (100) eine erste Basisstation (120), die zum Austauschen des digitalen Inhalts über drahtlose Kommunikationsverbindungen in einem ersten Frequenzband ausgelegt ist, wobei die Frequenzen des ersten Frequenzbandes höher oder gleich 6 Gigahertz sind, und eine zweite Basisstation (115) umfasst, die zum Austauschen des digitalen Inhalts über drahtlose Kommunikationsverbindungen in einem zweiten Frequenzband ausgelegt ist, wobei die Frequenzen des zweiten Frequenzbandes niedriger sind als 6 Gigahertz, wobei das Verfahren Folgendes umfasst:
(*i*) Bestimmen (310) einer Position der verbindbaren Vorrichtung (UD);
(*ii*) Veranlassen (325, 330, 335) der verbindbaren Vorrichtung (UD) und der ersten Basisstation (120) zu versuchen, eine drahtlose Kommunikationsverbindung im ersten Frequenzband dazwischen herzustellen;
(*iii*) wenn (330) die drahtlose Kommunikationsverbindung im ersten Frequenzband erfolgreich hergestellt wurde, Veranlassen (345) der ersten Basisstation (120), über die hergestellte drahtlose Kommunikationsverbindung im ersten Frequenzband den digitalen Inhalt mit der verbindbaren Vorrichtung (UD) auszutauschen;
(*iv*) Zustellen einer Benachrichtigung zur verbindbaren Vorrichtung, um einen Benutzer der verbindbaren Vorrichtung (UD) zu veranlassen (350, 355), die Position der verbindbaren Vorrichtung (UD) zu ändern, wenn keine drahtlose Kommunikationsverbindung im ersten Frequenzband erfolgreich hergestellt wurde,
(*v*) nach Schritt (*iv*) Durchführen der Schritte (*ii*) und (*iii*) und
Wiederholen der Schritte (*iv*) und (*v*), bis eine Schwellwertanzahl von Wiederholungen erreicht ist,
wobei das Verfahren, wenn die Schwellwertanzahl von Wiederholungen erreicht ist und keine drahtlose Kommunikationsverbindung im ersten Frequenzband erfolgreich hergestellt wurde, ferner das Veranlassen (375) der verbindbaren Vorrichtung (UD) und der zweiten Basisstation (115), eine drahtlose Kommunikationsverbindung im zweiten Frequenzband herzustellen, und das Veranlassen der zweiten Basisstation (115), den digitalen Inhalt über die hergestellte drahtlose Kommunikationsverbindung im zweiten Frequenzband mit der verbindbaren Vorrichtung (UD) auszutauschen, umfasst.

2. Verfahren (300A; 300B; 300C) nach Anspruch 1, das ferner das Wiederholen von Schritt *(ii)* umfasst, bis:
die drahtlose Kommunikationsverbindung im ersten Frequenzband hergestellt (330) oder eine vorbestimmte Zeitperiode (*Timeoutᵢ*) vergangen ist (335).

3. Verfahren (300A; 300B; 300C) nach einem der vorhergehenden Ansprüche, wobei der Schritt (*v*) das Durchführen von Schritt (*i*) vor den Schritten (*ii*) und (*iii*) umfasst.

4. Verfahren (300A) nach einem der vorhergehenden Ansprüche, wobei der Schritt (*ii*) nach einer Bestimmung (320), dass gemäß der Position der verbindbaren Vorrichtung (UD), die in Schritt (*i*) bestimmt wurde, und gemäß historischen Informationen über historische drahtlose Kommunikationsverbindungen im ersten Frequenzband in dieser Position, erwartet wird, dass eine erfolgreiche drahtlose Kommunikationsverbindung im ersten Frequenzband zwischen der verbindbaren Vorrichtung (UD) und der ersten Basisstation (120) hergestellt wird.

5. Verfahren (300A) nach Anspruch 4, das Folgendes umfasst:
wenn (320) gemäß der Position der verbindbaren Vorrichtung (UD), die in Schritt (*i*) bestimmt wurde, und gemäß den historischen Informationen über historische drahtlose Kommunikationsverbindungen im ersten Frequenzband in dieser Position erwartet wird, dass keine erfolgreiche drahtlose Kommunikationsverbindung im ersten Frequenzband zwischen der verbindbaren Vorrichtung (UD) und der ersten Basisstation (120) hergestellt wird:
Durchführen des Zustellens einer Benachrichtigung zur verbindbaren Vorrichtung, um den Benutzer der verbindbaren Vorrichtung (UD) zu veranlassen (350, 355), die Position der verbindbaren Vorrichtung (UD) zu ändern, und
Durchführen der Schritte (*ii*) und (*iii*)*.*

6. Verfahren (300A) nach Anspruch 4 oder 5, wobei die historischen Informationen für jede Position eine Anzeige über historische erfolgreiche drahtlose Kommunikationsverbindungen im ersten Frequenzband, die mit der ersten Basisstation (120) in dieser Position erfolgreich hergestellt wurden, und eine Anzeige über historische nicht erfolgreiche drahtlose Kommunikationsverbindungen im ersten Frequenzband, die in dieser Position mit der ersten Basisstation (120) nicht erfolgreich hergestellt wurden, umfassen, wobei erwartet wird, dass eine erfolgreiche drahtlose Kommunikationsverbindung im ersten Frequenzband zwischen der verbindbaren Vorrichtung (UD) und der ersten Basisstation (120) hergestellt wird, wenn (320) eine Anzahl von historischen erfolgreichen drahtlosen Kommunikationsverbindungen im ersten Frequenzband in dieser Position um eine vordefinierte Menge höher ist als die Anzahl von historischen nicht erfolgreichen drahtlosen Kommunikationsverbindungen im ersten Frequenzband in dieser Position.

7. Verfahren (300A; 300B; 300C) nach einem der vorhergehenden Ansprüche, wobei der digitale Inhalt eines oder beides von Folgendem umfasst:
einer Datei, die an einem Kommunikationsnetzwerk (105, 130) des Kommunikationssystems verfügbar und nach einem Zugang durch die verbindbare Vorrichtung (UD) zum Kommunikationsnetzwerk zum Herunterladen bereit ist;
einer Datei, die, nachdem eine vorbestimmte Bedingung erfüllt ist, zur verbindbaren Vorrichtung (UD) gepusht wird.

8. Verfahren (300A; 300B; 300C) nach einem der vorhergehenden Ansprüche, wobei der Schritt (*i*) das Bestimmen einer aktuellen Position der verbindbaren Vorrichtung oder einer bevorstehenden Position der verbindbaren Vorrichtung (UD) umfasst.

9. Verfahren (300A; 300B; 300C) nach einem der vorhergehenden Ansprüche, wobei die drahtlose Kommunikationsverbindung im ersten Frequenzband mindestens eines von Folgendem umfasst:
einer Millimeterwellenkommunikationsverbindung;
einer Submillimeterwellenkommunikationsverbindung;
einer optischen Kommunikationsverbindung, wie etwa eine Kommunikationsverbindung im Infrarotbereich, im Ultraviolettbereich und/oder im Bereich des sichtbaren Lichts, und
einer WiGig-Kommunikationsverbindung;

10. Verfahren (300A; 300B; 300C) nach einem der vorhergehenden Ansprüche, wobei die drahtlose Kommunikationsverbindung im zweiten Frequenzband mindestens eines von Folgendem umfasst:
einer zellularen Kommunikationsverbindung, wie etwa eine zellulare Kommunikationsverbindung, die unter Verwendung von einem oder mehrerem der Zugangstechnologien UTRA, WCDMA, CDMA2000, GERAN, LTE, LTE-Advanced und NR Radio hergestellt wird; und
einer Wi-Fi-Kommunikationsverbindung.

11. Verfahren (300A; 300B; 300C) nach einem der vorhergehenden Ansprüche, wobei die verbindbare Vorrichtung (UD) Folgendes umfasst:
eine Benutzervorrichtung, wie etwa ein Mobiltelefon, ein Smartphone, ein Tablet, ein persönlicher digitaler Assistent (PDA) oder ein Laptopcomputer, oder
eine Indoor- und/oder eine Outdoormaschine für Industrie- und/oder Hausanwendungen.

12. Kommunikationssystem (100) zum Austauschen eines digitalen Inhalts mit einer verbindbaren Vorrichtung (UD), die damit verbunden ist, wobei das Kommunikationssystem (100) Folgendes umfasst:
eine erste Basisstation (120), die dazu ausgelegt ist, den digitalen Inhalt über drahtlose Kommunikationsverbindungen in einem ersten Frequenzband auszutauschen, wobei die Frequenzen des ersten Frequenzbandes höher als oder gleich 6 GHz sind;
eine zweite Basisstation (115), die dazu ausgelegt ist, den digitalen Inhalt über drahtlose Kommunikationsverbindungen in einem zweiten Frequenzband auszutauschen, wobei die Frequenzen des zweiten Frequenzbandes niedriger sind als 6 GHz;
ein Kommunikationsnetzwerk (105), das zu Folgendem ausgelegt ist:
(*i*) Bestimmen einer Position der verbindbaren Vorrichtung (UD);
(*ii*) Veranlassen der verbindbaren Vorrichtung (UD) und der ersten Basisstation (120) zu versuchen, eine drahtlose Kommunikationsverbindung im ersten Frequenzband dazwischen herzustellen;
(*iii*) wenn die drahtlose Kommunikationsverbindung im ersten Frequenzband erfolgreich hergestellt wurde, Veranlassen der ersten Basisstation, über die hergestellte drahtlose Kommunikationsverbindung im ersten Frequenzband den digitalen Inhalt mit der verbindbaren Vorrichtung (UD) auszutauschen;
(*iv*) Zustellen einer Benachrichtigung zur verbindbaren Vorrichtung, um einen Benutzer der verbindbaren Vorrichtung (UD) zu veranlassen, die Position der verbindbaren Vorrichtung (UD) zu ändern, wenn keine drahtlose Kommunikationsverbindung im ersten Frequenzband erfolgreich hergestellt wurde,
(*v*) nach Schritt (*iv*) Durchführen der Schritte (*ii*) und (*iii*) und
Wiederholen der Schritte (*iv*) und (*v*), bis eine Schwellwertanzahl von Wiederholungen erreicht ist,
wobei das Kommunikationsnetzwerk (105) ferner dazu ausgelegt ist, wenn die Schwellwertanzahl von Wiederholungen erreicht ist und keine drahtlose Kommunikationsverbindung im ersten Frequenzband erfolgreich hergestellt wurde, die verbindbare Vorrichtung (UD) und die zweite Basisstation (115) zu veranlassen, eine drahtlose Kommunikationsverbindung im zweiten Frequenzband herzustellen, und die zweite Basisstation (115) zu veranlassen, den digitalen Inhalt über die hergestellte drahtlose Kommunikationsverbindung im zweiten Frequenzband mit der verbindbaren Vorrichtung (UD) auszutauschen.

## Revendications

1. Procédé (**300A ; 300B ; 300C**) d'échange d'un contenu numérique entre un système de communication (**100**) et un dispositif connectable (**UD**) connecté à celui-ci, dans lequel le système de communication (**100**) comprend une première station de base (**120**) configurée pour échanger le contenu numérique par l'intermédiaire de liaisons de communication sans fil dans une première bande de fréquences, les fréquences de la première bande de fréquences étant supérieures ou égales à 6 GHz, et une deuxième station de base (**115**) configurée pour échanger le contenu numérique par l'intermédiaire de liaisons de communication sans fil dans une deuxième bande de fréquences, les fréquences de la deuxième bande de fréquences étant inférieures à 6 GHz, le procédé comprenant le fait de :
*(i)* déterminer (**310**) une position du dispositif connectable (**UD**);
*(ii)* amener (**325, 330, 335**) le dispositif connectable (**UD**) et la première station de base (**120**) à tenter d'établir une liaison de communication sans fil dans la première bande de fréquences entre eux ;
*(iii)* lorsque (**330**) la liaison de communication sans fil dans la première bande de fréquences a été établie avec succès, amener (**345**) la première station de base (**120**) à échanger le contenu numérique avec le dispositif connectable (**UD**) par le biais de la liaison de communication sans fil établie dans la première bande de fréquences ;
*(iv)* distribuer une notification au dispositif connectable pour inviter (**350, 355**) un utilisateur du dispositif connectable (**UD**) à modifier la position du dispositif connectable (**UD**), lorsqu'aucune liaison de communication sans fil dans la première bande de fréquences n'a été établie avec succès,
*(v)* après l'étape *(iv),* effectuer les étapes *(ii)* et *(iii),* et
réitérer lesdites étapes *(iv)* et *(v)* jusqu'à ce qu'un nombre seuil d'itérations ait été atteint,
le procédé comprenant en outre, lorsque le nombre seuil d'itérations a été atteint et qu'aucune liaison de communication sans fil dans la première bande de fréquences n'a été établie avec succès, le fait d'amener (**375**) le dispositif connectable (**UD**) et la deuxième station de base (**115**) à établir une liaison de communication sans fil dans la deuxième bande de fréquences, et le fait d'amener la deuxième station de base (**115**) à échanger le contenu numérique avec le dispositif connectable (**UD**) par le biais de la liaison de communication sans fil établie dans la deuxième bande de fréquences.

2. Procédé (**300A ; 300B ; 300C**) selon la revendication 1, comprenant en outre le fait de réitérer l'étape *(ii)* jusqu'à ce que :
la liaison de communication sans fil dans la première bande de fréquences soit établie (330) ou qu'une période de temps prédéterminée (*Timeout₁*) se soit écoulée (335).

3. Procédé **(300A; 300B; 300C)** selon l'une quelconque des revendications précédentes, dans lequel ladite étape (v) comprend la réalisation de l'étape *(i)* avant les étapes *(ii)* et *(iii).*

4. Procédé (**300A**) selon l'une quelconque des revendications précédentes, dans lequel ladite étape *(ii)* est effectuée après une détermination (320) selon laquelle, en fonction de la position du dispositif connectable (UD) déterminée à l'étape (ii), et en fonction d'informations historiques concernant des liaisons de communication sans fil historiques dans la première bande de fréquences à cette position, une liaison de communication sans fil réussie dans la première bande de fréquences est susceptible d'être établie entre le dispositif connectable (**UD**) et la première station de base (**120**).

5. Procédé (**300A**) selon la revendication 4, comprenant le fait de :
lorsque (**320**), en fonction de la position du dispositif connectable (**UD**) déterminée à l'étape *(i),* et en fonction des informations historiques concernant les liaisons de communication sans fil historiques dans la première bande de fréquences à cette position, aucune liaison de communication sans fil réussie dans la première bande de fréquences n'est susceptible d'être établie entre le dispositif connectable (**UD**) et la première station de base (**120**) :
effectuer ladite distribution d'une notification au dispositif connectable pour inviter (**350, 355**) l'utilisateur du dispositif connectable (UD) à modifier la position du dispositif connectable (**UD**), et
effectuer les étapes *(ii)* et *(iii).*

6. Procédé (**300A**) selon la revendication 4 ou 5, dans lequel, pour chaque position, les informations historiques comprennent une indication concernant les liaisons de communication sans fil historiques réussies dans la première bande de fréquences qui ont été établies avec succès avec la première station de base (**120**) à cette position, et une indication concernant les liaisons de communication sans fil historiques non réussies dans la première bande de fréquences qui n'ont pas été établies avec succès avec cette première station de base (**120**) à cette position, dans lequel une liaison de communication sans fil réussie dans la première bande de fréquences est susceptible d'être établie entre le dispositif connectable (**UD**) et la première station de base (**120**) si (**320**) un nombre de liaisons de communication sans fil historiques réussies dans la première bande de fréquences à cette position est supérieur, d'une quantité prédéfinie, au nombre de liaisons de communication sans fil historiques non réussies dans la première bande de fréquences à cette position.

7. Procédé (**300A; 300B; 300C**) selon l'une quelconque des revendications précédentes, dans lequel le contenu numérique comprend l'un des fichiers suivants, ou les deux :
un fichier disponible au niveau d'un réseau de communication (**105, 130**) du système de communication, et prêt à être téléchargé lors de l'accès par le dispositif connectable (**UD**) audit réseau de communication ;
un fichier poussé vers le dispositif connectable (UD) lorsqu'un état prédéterminé est satisfait.

8. Procédé (**300A; 300B; 300C**) selon l'une quelconque des revendications précédentes, dans lequel ladite étape *(i)* comprend le fait de déterminer une position actuelle du dispositif connectable ou une position à venir du dispositif connectable (**UD**).

9. Procédé (**300A; 300B; 300C**) selon l'une quelconque des revendications précédentes, dans lequel la liaison de communication sans fil dans la première bande de fréquences comprend au moins l'une parmi :
une liaison de communication à ondes millimétriques ;
une liaison de communication à ondes submillimétriques ;
une liaison de communication optique, telle qu'une liaison de communication à lumière infrarouge, ultraviolette et/ou visible, et
une liaison de communication WiGig.

10. Procédé (**300A ; 300B ; 300C**) selon l'une quelconque des revendications précédentes, dans lequel la liaison de communication sans fil dans la deuxième bande de fréquences comprend au moins l'une parmi :
une liaison de communication cellulaire, telle qu'une liaison de communication cellulaire établie à l'aide d'une ou plusieurs des technologies d'accès radio UTRA, WCDMA, CDMA2000, GERAN, LTE, LTE-Advanced et NR ; et
une liaison de communication Wi-Fi.

11. Procédé **(300A; 300B; 300C)** selon l'une quelconque des revendications précédentes, dans lequel le dispositif connectable (UD) comprend :
un dispositif utilisateur, tel qu'un téléphone mobile, un téléphone intelligent, une tablette, un assistant numérique personnel (PDA) ou un ordinateur portable, ou
une machine d'intérieur et/ou d'extérieur pour des applications industrielles et/ou domestiques.

12. Système de communication (**100**) destiné à échanger un contenu numérique avec un dispositif connectable (**UD**) connecté à celui-ci, le système de communication (**100**) comprenant :
une première station de base (**120**) configurée pour échanger le contenu numérique par l'intermédiaire de liaisons de communication sans fil dans une première bande de fréquences, les fréquences de la première bande de fréquences étant supérieures ou égales à 6 GHz ;
une deuxième station de base (**115**) configurée pour échanger le contenu numérique par l'intermédiaire de liaisons de communication sans fil dans une deuxième bande de fréquences, les fréquences de la deuxième bande de fréquences étant inférieures à 6 GHz ;
un réseau de communication (**105**) configuré pour :
*(i)* déterminer une position du dispositif connectable (**UD**) ;
*(ii)* amener le dispositif connectable (**UD**) et la première station de base (**120**) à tenter d'établir une liaison de communication sans fil dans la première bande de fréquences entre eux ;
*(iii)* lorsque la liaison de communication sans fil dans la première bande de fréquences a été établie avec succès, amener la première station de base à échanger le contenu numérique avec le dispositif connectable (**UD**) par le biais de la liaison de communication sans fil établie dans la première bande de fréquences ;
*(iv)* distribuer une notification au dispositif connectable pour inviter un utilisateur du dispositif connectable (**UD**) à modifier la position du dispositif connectable (**UD**) lorsqu'aucune liaison de communication sans fil dans la première bande de fréquences n'a été établie avec succès,
*(v)* après l'étape *(iv),* effectuer les étapes *(ii)* et *(iii),* et
réitérer lesdites étapes *(iv)* et *(v)* jusqu'à ce qu'un nombre seuil d'itérations ait été atteint,
le réseau de communication (**105**) étant en outre configuré pour, lorsque le nombre seuil d'itérations a été atteint et qu'aucune liaison de communication sans fil dans la première bande de fréquences n'a été établie avec succès, amener le dispositif connectable (**UD**) et la deuxième station de base (**115**) à établir une liaison de communication sans fil dans la deuxième bande de fréquences, et amener la deuxième station de base (**115**) à échanger le contenu numérique avec le dispositif connectable (**UD**) par le biais de la liaison de communication sans fil établie dans la deuxième bande de fréquences.
